# EUROPEAN PATENT APPLICATION

(11) **EP 2 018 029 A1**
(43) Date of publication of application: **21.01.2009**
(21) Application number: 08159893.0
(22) Date of filing: 08.07.2008
(51) Int. Cl.: H04M 1/02, H04M 1/60, H04M 1/725

(54) **Wireless earphone for a communication apparatus connected to the PSTN**

(30) Priority: 19.07.2007 CN 200710130432
(71) Applicant: Lin, Pi-Fen, Taipei City 106 (TW)
(72) Inventor: Lin, Pi-Fen, Taipei City 106 (TW)
(74) Representative: Viering, Jentschura & Partner

(57) **Abstract**

The present invention discloses an associated communication apparatus that includes a telephone transmitter (9,32), a telephone base (10,3,3'), and a Bluetooth earphone (5,4,4') so that user can install the telephone transmitter (9,32) into the telephone base (10,3,3') and can install the Bluetooth earphone (5,4,4') into the telephone transmitter (9,32). Furthermore, the telephone transmitter (9,32) can be removed from the base (10,3) and the Bluetooth earphone (5,4,4') can be removed from the telephone transmitter (9,32). The present invention provides various means for communication such as the earphone (5,4,4'), the telephone transmitter (9,32), and the telephone base (10,3,3').

## Description

### BACKGROUND OF THE INVENTION

### 1. Field of the Invention

The present invention relates to an associated communication apparatus. In particular, the communication apparatus comprises a telephone transmitter, a telephone base, and a Bluetooth earphone wherein the user can install the telephone transmitter into the base and can install the Bluetooth earphone into the telephone transmitter. Furthermore, the telephone transmitter can be removed from the base and the Bluetooth earphone can be removed from the telephone transmitter.

### 2. Description of the Related Art

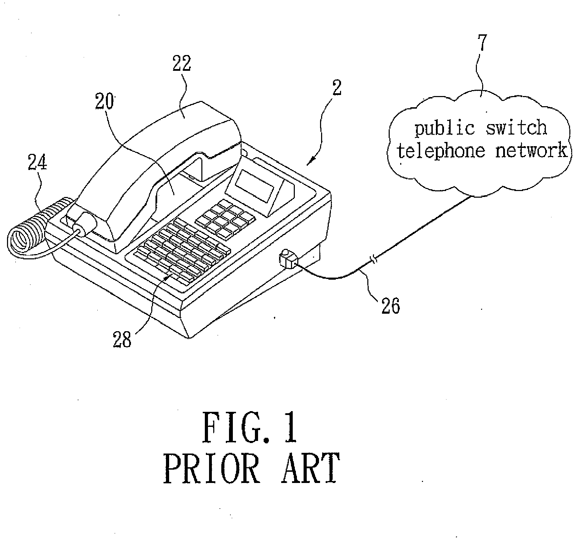

Reference is made to FIG. 1, which shows a schematic diagram of a traditional telephone set. The telephone set 2 has a communication connecting wire 24 between the dialing host 20 and the transmitter 22. It uses a transmitting wire 26 to connect to the public switch telephone network (PSTN) 7. The user presses the key 28 on the host to make a call, links to a remote person via the PSTN 7, and communicates with the person via the transmitter 22.

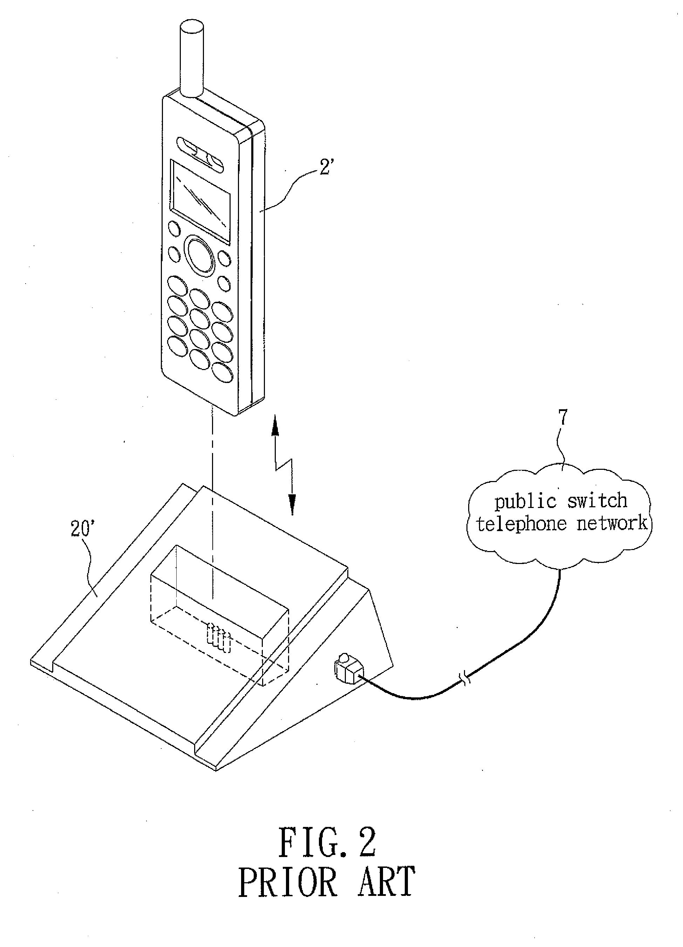

However, due to developments in wireless communication technology, the traditional structure of the dialing host 20 connecting with the transmitter 22 via the communication connecting wire 24 has been improved to become a wireless dialing transmitter 2' and a base station 20' both having wireless communicating functions. The wireless dialing transmitter 2' links to the base station 20' by a wireless method, as shown in FIG. 2. The base station 20' links to the PSTN 7. Therefore, users can make calls to one another.

Furthermore, Bluetooth communication also is also increasingly being applied to personal portable communication equipment, such as the communication between Bluetooth earphones and Bluetooth cell phones. The user can receive a call anywhere, without having to hold on to his or her cell phone.

However, when the user communicates via the traditional telephone set 2 with the communication connecting wire 24, it is inconvenient for the user to communicate by the communication connecting wire 24. When the user communicates via the wireless dialing transmitter 2' he or she needs to hold the phone close to their ear to hear incoming sounds. If the user is involved in a long call or uses the phone for extended periods, the user's arm can start to ache. Hence, communication quality is reduced.

To sum up, users wish to receive calls anywhere without holding their transmitter and have excellent communication quality in their life. The present invention aims to provide users with a device that meets these wishes.

### SUMMARY OF THE INVENTION

One particular aspect of the present invention is to provide an associated communication apparatus that includes a telephone transmitter, a telephone base, and a Bluetooth earphone. The user can install the telephone transmitter into the base and can install the Bluetooth earphone into the telephone transmitter. Furthermore, the telephone transmitter can be removed from the base and the Bluetooth earphone can be removed from the telephone transmitter. The present invention provides various means for communication, such as the earphone, the telephone transmitter, and the telephone base. Furthermore, the telephone base could receive the earphone so as to provide another means of communication to user.

The first embodiment of the present invention comprises a telephone base, a telephone transmitter, and a Bluetooth earphone. The telephone base has a telephone-controller disposed internally therein and a transmitter receiving slot disposed externally thereon, wherein the telephone-controller is used to provide a PSTN call service and the transmitter receiving slot configures a first connecter connected to the telephone-controller. The telephone transmitter has a transmitter-controller disposed internally therein and an earphone receiving slot, a first signal transmitting terminal disposed externally thereon, wherein the earphone receiving slot configures a second connecter. The first signal transmitting terminal and the second connecter connect to the transmitter-controller, and the first signal transmitting terminal connects to the first connecter while the transmitter receiving slot receives the telephone transmitter. The Bluetooth earphone has an earphone controller disposed internally therein and a second signal transmitting terminal disposed externally thereon, wherein the second signal transmitting terminal connects to the earphone controller, and connects to the second connecter while the earphone receiving slot receives the Bluetooth earphone.

Moreover, the second embodiment of the present invention comprises a telephone base, a telephone transmitter, and a Bluetooth earphone. The telephone base has a telephone-controller disposed internally therein and a transmitter receiving slot disposed externally thereon, wherein the telephone-controller is used to provide a PSTN call service and the transmitter receiving slot configures a hook switch connected to the telephone-controller. The telephone transmitter has a transmitter-controller disposed internally therein and an earphone receiving slot disposed externally thereon, wherein the earphone receiving slot configures a connecter. The transmitter-controller connects to the connecter and to the telephone base via a communication connecting wire. The Bluetooth earphone has an earphone controller internally and a signal transmitting terminal externally, wherein the signal transmitting terminal connects to the earphone controller, and connects to the connecter while the earphone receiving slot receives the Bluetooth earphone.

Furthermore, the third embodiment of the present invention comprises a telephone base and a Bluetooth earphone. The telephone base has a telephone-controller internally and an earphone receiving slot externally, wherein the telephone-controller is used to provide a PSTN call service and the earphone receiving slot configures a connecter connected to the telephone-controller. The Bluetooth earphone has an earphone controller internally and a signal transmitting terminal externally, wherein the signal transmitting terminal connects to the earphone controller, and connects to the connecter while the earphone receiving slot receives the Bluetooth earphone.

For further understanding of the invention, reference is made to the following detailed description illustrating the embodiments and examples of the invention. The description is only for illustrating the invention and is not intended to be considered limiting of the scope of the claim.

### BRIEF DESCRIPTION OF THE DRAWINGS

The drawings included herein provide a further understanding of the invention. A brief introduction of the drawings is as follows:
FIG. 1 is a schematic diagram of a traditional telephone set;
FIG. 2 is a schematic diagram of the traditional wireless telephone set;
FIG. 3 is a schematic diagram of the appearance of the first embodiment of the present invention;
FIG. 4 is a schematic diagram of the appearance of the second embodiment of the present invention;
FIG. 5 is a schematic diagram of the appearance of the third embodiment of the present invention;

### DETAILED DESCRIPTION OF THE PREFERRED EMBODIMENTS

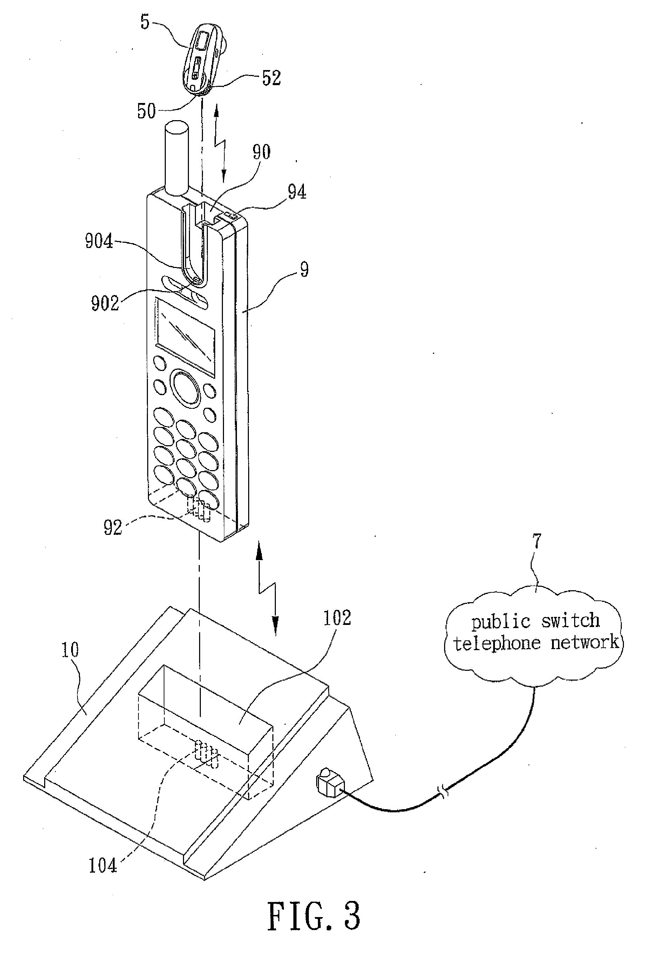

Reference is made to FIG. 3, which shows a schematic diagram of the appearance of the first embodiment of the present invention. The associated communication apparatus includes a telephone base 10, a telephone transmitter 9, and a Bluetooth earphone 5. The telephone base 10 has a telephone controller (not shown) disposed internally therein and a transmitter receiving slot 102 disposed externally thereon, wherein the telephone-controller is used to provide a PSTN call service and the transmitter receiving slot 102 configures a first connecter 104 connected to the telephone-controller. The telephone transmitter 9 has a transmitter-controller (not shown) internally and an earphone receiving slot 90, a first signal transmitting terminal 92 externally, wherein the earphone receiving slot 90 configures a second connecter 902, the first signal transmitting terminal 92 and the second connecter 902 connect to the transmitter-controller, and the first signal transmitting terminal 92 connects to the first connecter 104 while the transmitter receiving slot 102 receives the telephone transmitter 9.

The Bluetooth earphone 5 has an earphone controller (not shown) internally and a second signal transmitting terminal 50 externally, wherein the second signal transmitting terminal 50 connects to the earphone controller, and connects to the second connecter 902 while the earphone receiving slot 90 receives the Bluetooth earphone 5.

Reference is made to FIG. 3 again. The telephone base 10 is linked to a PSTN 7 in a wired manner and communicates with a terminal (not shown) via the PSTN 7. Moreover, a user utilizes the telephone base 10 to communicate with a terminal via either a hands-free or speaker method, while the telephone base 10 receives the telephone transmitter 9 that has received the Bluetooth earphone 5.

Furthermore, the user can remove the telephone transmitter 9 from the telephone base 10 and communicate with a terminal by holding the telephone transmitter 9. At this time, the user can also remove the Bluetooth earphone 5 from the telephone transmitter 9 and communicate with a terminal by th e Bluetooth earphone 5 to make a private call. In the manner mentioned above, when the telephone transmitter 9 is removed from the telephone base 10, the telephone transmitter 9 and the telephone base 10 communicate with each other via Bluetooth. Similarly, when the Bluetooth earphone 5 is removed from the telephone transmitter 9, the Bluetooth earphone 5 and the telephone transmitter 9 also communicate with each other via Bluetooth.

Reference is made to FIG. 3 again. In order to rapidly connect the Bluetooth earphone 5 with the telephone transmitter 9, the Bluetooth earphone 5 further includes an absorbable element 52, and a magnetic element 904 in the earphone receiving slot 90 of the telephone transmitter 9. When the Bluetooth earphone 5 nears the earphone receiving slot 90 of the telephone transmitter 9, the magnetic attracting effect generated by the magnetic element 904 attracts the absorbable element 52 of the Bluetooth earphone 5. Thereby, the Bluetooth earphone 5 is rapidly received in the earphone receiving slot 90 and the signal transmitting terminal 50 of the Bluetooth earphone 5 is electrically connected with the second connector 902 of the telephone transmitter 9.

Reference is made to FIG. 3 again. The first signal transmitting terminal 92 of the telephone transmitter 9 and the first connecter 104 of the telephone base 10 are connected via a USB interface or a metallic contact interface. Similarly, the second signal transmitting terminal 50 of the Bluetooth earphone 5 and the second connecter 902 of the telephone transmitter 9 are connected via a USB interface or a metallic contact interface. Moreover, the telephone transmitter 9 further comprises a lock machine 94 wherein the lock machine 94 is embedded in the telephone transmitter 9 for locking the Bluetooth earphone 5 in the earphone receiving slot 90 so as to ensure that the Bluetooth earphone 4 does not fall out or become misplaced.

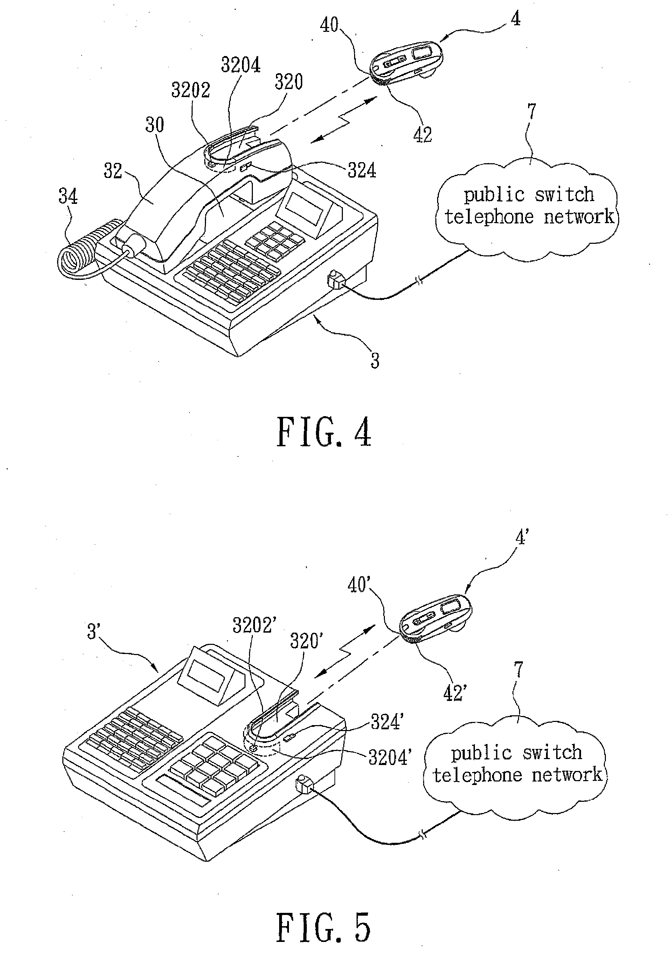

Reference is made to FIG. 4, which shows a schematic diagram of the appearance of the second embodiment of the present invention. The associated communication apparatus includes a telephone base 3, a telephone transmitter 32, and a Bluetooth earphone 4. The telephone base 3 has a telephone-controller (not shown) internally and a transmitter receiving slot 30 externally, wherein the telephone-controller is used to provide a PSTN call service and the transmitter receiving slot 30 configures a hook switch (not shown) connected to the telephone-controller. The telephone transmitter 32 has a transmitter-controller (not shown) internally and an earphone receiving slot 320 externally, wherein the earphone receiving slot 320 configures a connecter 3202, and the transmitter-controller connects to the connecter 3202 and to the telephone base 3 via a communication connecting wire 34. The Bluetooth earphone 4 has an earphone controller (not shown) internally and a signal transmitting terminal 40 externally, wherein the signal transmitting terminal 40 connects to the earphone controller, and connects to the connecter 3202 while the earphone receiving slot 320 receives the Bluetooth earphone 4.

Reference is made to FIG. 4 again. The telephone base 3 is linked to a PSTN 7 in a wired manner and communicated with a terminal (not shown) via the PSTN 7. Moreover, user utilizes the telephone base 3 to communicate with a terminal by holding the telephone transmitter 32. Furthermore, the user can remove the Bluetooth earphone 4 from the telephone transmitter 32 and communicates with a terminal by Bluetooth earphone 4, and a private call is made.

In the mention of the above, when the telephone transmitter 32 is removed from the telephone base 3, the hook switch is acted. At this time, the transmission of sound signal is come from the terminal and through the PSTN 7, the telephone-controller of the telephone base 3, the communication connecting wire 34 and the transmitter-controller of the telephone transmitter 32 to form the duplex transmission.

Moreover, when the Bluetooth earphone 4 is removed from the telephone transmitter 32 the transmitter-controller of the telephone transmitter 32 informs the telephone-controller of the telephone base 3 to form a wireless transmission with the Bluetooth earphone 4. At this time, the transmission of sound signals come from the terminal and through the PSTN 7, the telephone-controller of the telephone base 3 and the Bluetooth earphone 4 to form a duplex transmission.

Reference is made to FIG. 4 again. In order to rapidly connect the Bluetooth earphone 4 with the telephone transmitter 32, the Bluetooth earphone 4 further includes an absorbable element 42 and a magnetic element 3204 in the earphone receiving slot 320 of the telephone transmitter 32. When the Bluetooth earphone 4 nears the earphone receiving slot 320 of the telephone transmitter 32, the magnetic attracting effect generated by the magnetic element 3204 attracts the absorbable element 42 of the Bluetooth earphone 4. Thereby, the Bluetooth earphone 4 is rapidly received in the earphone receiving slot 320, and the signal transmitting terminal 40 of the Bluetooth earphone 4 is electrically connected with the connector 3202 of the telephone transmitter 32.

Reference is made to FIG. 4 again. The signal transmitting terminal 40 of the Bluetooth earphone 4 and the connecter 3202 of the telephone transmitter 32 are connected via a USB interface or a metallic contact interface. Moreover, the telephone transmitter 32 further comprises a lock machine 324, wherein the lock machine 324 is embedded in the telephone transmitter 32 for locking the Bluetooth earphone 4 in the earphone receiving slot 320 so as to ensure that the Bluetooth earphone 4 does not fall out or become misplaced.

Reference is made to FIG. 5, which shows a schematic diagram of the appearance of the third embodiment of the present invention. The associated communication apparatus includes a telephone base 3'and a Bluetooth earphone 4'. The telephone base 3' has a telephone-controller (not shown) internally and an earphone receiving slot 320' externally, wherein the telephone-controller is used to provide a PSTN call service and the earphone receiving slot 320' configures a connecter 3202' connected to the telephone-controller. The Bluetooth earphone 4' has an earphone controller (not shown) internally and a signal transmitting terminal 40' externally, wherein the signal transmitting terminal 40' connects to the earphone controller, and connects to the connecter 3202' while the earphone receiving slot 320' receives the Bluetooth earphone 4'.

Reference is made to FIG. 5 again. The telephone base 3' is linked to a PSTN 7 in a wired manner and communicates with a terminal (not shown) via the PSTN 7. Moreover, the user can remove the Bluetooth earphone 4' from the telephone base 3'and communicate with a terminal via the Bluetooth earphone 4' to make a private call.

In the description mentioned above, when the Bluetooth earphone 4' is removed from the telephone base 3', the telephone-controller of the telephone base 3' is built the wireless communication with the Bluetooth earphone 4'. At this time, the transmission of sound signal comes from the terminal and through the PSTN 7. The telephone-controller of the telephone base 3' and the Bluetooth earphone 4' form the duplex transmission.

Reference is made to FIG. 5 again. In order to rapidly connect the Bluetooth earphone 4' with the telephone base 3', the Bluetooth earphone 4' further includes an absorbable element 42', and a magnetic element 3204' in the earphone receiving slot 320' of the telephone base 3'. When the Bluetooth earphone 4' nears the earphone receiving slot 320' of the telephone base 3', the magnetic attracting effect generated by the magnetic element 3204' attracts the absorbable element 42' of the Bluetooth earphone 4'. Thereby, the Bluetooth earphone 4' is rapidly received in the earphone receiving slot 320', and the signal transmitting terminal 40' of the Bluetooth earphone 4' is electrically connected with the connector 3202' of the telephone base 3'.

Reference is made to FIG. 5 again. The signal transmitting terminal 40' of the Bluetooth earphone 4' and the connecter 3202' of the telephone base 3' are connected via a USB interface or a metallic contact interface. Moreover, the telephone base 3' further comprises a lock machine 324', wherein the lock machine 324' is embedded in the telephone base 3' for locking the Bluetooth earphone 4' in the earphone receiving slot 320' so as to ensure that the Bluetooth earphone 4' does not fall out or become misplaced.

To sum up, the associated communication apparatus of the present invention allows the user to install the telephone transmitter into the base and install the Bluetooth earphone into the telephone transmitter. Furthermore, the telephone transmitter can be removed from the base and the Bluetooth earphone can be removed from the telephone transmitter. Therefore, the present invention provides the user with various means for communication so as to avoid the user's arm from aching when the user has a long call or uses the phone for extended periods. The means for communication comprises:
1.Utilizing the telephone base for communicating with the terminal;
2.Utilizing the telephone transmitter for communicating with the terminal;
3.Utilizing the Bluetooth earphone for communicating with the terminal.

The description above only illustrates specific embodiments and examples of the invention. The invention should therefore cover various modifications and variations made to the herein-described structure and operations of the invention, provided they fall within the scope of the invention as defined in the following appended claims.

## Claims

1. An associated communication apparatus, linked with a PSTN for making a PSTN call, comprising:
a telephone base having a telephone-controller internally for providing a PSTN call service and a transmitter receiving slot externally, wherein the transmitter receiving slot configures a first connecter connected to the telephone-controller;
a telephone transmitter having a transmitter-controller internally and having an earphone receiving slot and a first signal transmitting terminal externally, wherein the earphone receiving slot configures a second connecter, the first signal transmitting terminal and the second connecter connect to the transmitter-controller, and the first signal transmitting terminal connects to the first connecter while the transmitter receiving slot receives the telephone transmitter; and
a Bluetooth earphone having an earphone controller disposed internally therein and a second signal transmitting terminal disposed externally thereon,
wherein the second signal transmitting terminal connects to the earphone controller, and connects to the second connecter while the earphone receiving slot receives the Bluetooth earphone.

2. The associated communication apparatus as claimed in claim 1, wherein the first connecter, the second connecter, the first signal transmitting terminal, or the second signal transmitting terminal is a USB interface.

3. The associated communication apparatus as claimed in claim 1, wherein the first connecter, the second connecter, the first signal transmitting terminal, or the second signal transmitting terminal is a metallic contact interface.

4. The associated communication apparatus as claimed in claim 1, wherein the Bluetooth earphone further comprises an absorbable element, and a magnetic element in the earphone receiving slot, the magnetic element attracts the absorbable element of the Bluetooth earphone when the Bluetooth earphone nears the earphone receiving slot.

5. The associated communication apparatus as claimed in claim 1, further comprising a lock machine, wherein the lock machine is embedded in the telephone transmitter for locking the Bluetooth earphone in the earphone receiving slot.

6. An associated communication apparatus, linked with a PSTN for making a PSTN call, comprising:
a telephone base having a telephone-controller disposed internally therein for providing a PSTN call service and a transmitter receiving slot disposed externally thereon, wherein the transmitter receiving slot configures a hook switch connected to the telephone-controller;
a telephone transmitter having a transmitter-controller internally and an earphone receiving slot externally, wherein the earphone receiving slot configures a connecter, and the transmitter-controller connects to the connecter and to the telephone base via a communication connecting wire; and
a Bluetooth earphone having an earphone controller internally and a signal transmitting terminal externally, wherein the signal transmitting terminal connects to the earphone controller, and connects to the connecter while the earphone receiving slot receives the Bluetooth earphone.

7. The associated communication apparatus as claimed in claim 6, wherein the connecter and the signal transmitting terminal are USB interfaces.

8. The associated communication apparatus as claimed in claim 6, wherein the connecter and the signal transmitting terminal are metallic contact interfaces.

9. The associated communication apparatus as claimed in claim 6, wherein the Bluetooth earphone further comprises an absorbable element, and a magnetic element in the earphone receiving slot, the magnetic element attracts the absorbable element of the Bluetooth earphone when the Bluetooth earphone nears the earphone receiving slot.

10. The associated communication apparatus as claimed in claim 6, further comprising a lock machine, wherein the lock machine is embedded in the telephone transmitter for locking the Bluetooth earphone in the earphone receiving slot.

11. An associated communication apparatus, linked with a PSTN for making a PSTN call, comprising:
a telephone base having a telephone-controller internally for providing a PSTN call service and an earphone receiving slot externally, wherein the earphone receiving slot configures a connecter connected to the telephone-controller; and
a Bluetooth earphone having an earphone controller internally and a signal transmitting terminal externally, wherein the signal transmitting terminal connects to the earphone controller, and connects to the connecter while the earphone receiving slot receives the Bluetooth earphone.

12. The associated communication apparatus as claimed in claim 11, wherein the connecter and the signal transmitting terminal are USB interfaces.

13. The associated communication apparatus as claimed in claim 11, wherein the connecter and the signal transmitting terminal are metallic contact interfaces.

14. The associated communication apparatus as claimed in claim 11, wherein the Bluetooth earphone further comprises an absorbable element, and a magnetic element in the earphone receiving slot, the magnetic element attracts the absorbable element of the Bluetooth earphone when the Bluetooth earphone nears the earphone receiving slot.

15. The associated communication apparatus as claimed in claim 11, further comprising a lock machine, wherein the lock machine is embedded in the telephone base for locking the Bluetooth earphone in the earphone receiving slot.
